(19)

Europäisches
Patentamt
European
Patent Office
Office européen
des brevets

(11) **EP 4 120 400 A1**

(12) **EUROPEAN PATENT APPLICATION**
published in accordance with Art. 153(4) EPC

(43) Date of publication:
**18.01.2023 Bulletin 2023/03**

(21) Application number: **21768564.3**

(22) Date of filing: **08.03.2021**

(51) International Patent Classification (IPC):
***H01M 4/62*** (2006.01)

(52) Cooperative Patent Classification (CPC):
**H01M 4/62;** Y02E 60/10

(86) International application number:
**PCT/JP2021/008854**

(87) International publication number:
**WO 2021/182364 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2020 JP 2020040066**

(71) Applicant: **Nippon Paper Industries Co., Ltd. Tokyo 114-0002 (JP)**

(72) Inventors:
• **SHINDO, Hiroki**
  **Tokyo 114-0002 (JP)**
• **NISHIMORI, Yoshito**
  **Tokyo 114-0002 (JP)**
• **AIMI, Hikaru**
  **Tokyo 114-0002 (JP)**

(74) Representative: **Kuhnen & Wacker**
  **Patent- und Rechtsanwaltsbüro PartG mbB**
  **Prinz-Ludwig-Straße 40A**
  **85354 Freising (DE)**

(54) **ORGANIC SHRINK-PROOFING AGENT FOR LEAD ACID STORAGE BATTERIES, AND METHOD FOR PRODUCING SAME**

(57)    An organic expander for lead storage batteries and a method for producing the same according to the present invention are: an organic expander for lead storage batteries containing lignosulfonate, in which a content of reducing sugars per solid content is 5% by mass or less of the total, and a content of a substance with a molecular weight of 5,000 or less per solid content is 30% by mass or less of the total; and a method for producing the organic expander for lead storage batteries, the method including a step of subjecting a sulfite cooking black liquor to ultrafiltration treatment using an ultrafiltration membrane to recover a concentrated liquor of the sulfite cooking black liquor obtained.

**EP 4 120 400 A1**

**Description**

Technical Field

The present invention relates to an organic expander for lead storage batteries.

Background Art

Since a lead storage battery is relatively inexpensive and has stable performance as a secondary battery, the lead storage battery has been widely used as a battery for an automobile, a battery for a portable device, a backup battery for a computer, a battery for communication, or the like.

When the lead storage battery changes from a discharged state to a charged state during repeated charging and discharging, the negative electrode active material shrinks, the specific surface area decreases, and discharge performance deteriorates. Further, in the negative electrode active material, metallic lead emits electrons and changes to lead sulfate in a discharge reaction, and the lead sulfate obtains electrons and changes to metallic lead in a charge reaction. When the lead sulfate is coarsened, the lead sulfate is hardly dissolved in the charge reaction, and charging performance deteriorates.

It has been proposed to add lignin extracted from wood as an organic expander to be added to a negative electrode active material in order to prevent shrinkage of the negative electrode active material of a lead storage battery (Patent Literatures 1 to 3).

In addition, several types of lignins have been disclosed as lignin for lead storage batteries (Patent Literatures 4 to 11) .

Citation List

Patent Literature

Patent Literature 1: U.S. Pat. No. 2371136
Patent Literature 2: U.S. Pat. No. 3523041
Patent Literature 3: JP S62-145655 A
Patent Literature 4: JP 2002-117856 A
Patent Literature 5: WO 2002/039519
Patent Literature 6: JP 2005-294027 A
Patent Literature 7: JP 2007-165273 A
Patent Literature 8: JP H11-204111 A
Patent Literature 9: JP H09-007630 A
Patent Literature 10: U.S. Pat. No. 6346347
Patent Literature 11: U.S. Pat. No. 6664002

Summary of Invention

Technical Problem

Various performances are required in a lead storage battery, but in general, when lignin is added to a negative electrode of a lead storage battery, an effect such as improvement of high-rate discharge characteristics or suppression of sulfation can be obtained, but there is a problem that charge acceptance is lowered by its nature.

An object of the present invention is to provide an organic expander capable of improving charge acceptance while maintaining discharge characteristics of the lead storage battery described above.

Solution to Problem

As a result of intensive studies on the above problems, the present inventors have found that the above problems can be solved by using, as an organic expander for lead storage batteries, a concentrated liquor in which a content of a substance with a molecular weight of 5,000 or less is 30% by mass or less of the total by subjecting a sulfite cooking black liquor to ultrafiltration treatment using an ultrafiltration membrane, thereby completing the present invention.

That is, the present inventors provide the following [1] and [2].

[1] A method for producing an organic expander for lead storage batteries containing lignosulfonate, the method including a step of subjecting a sulfite cooking black liquor to ultrafiltration treatment using an ultrafiltration membrane to recover a concentrated liquor of the sulfite cooking black liquor obtained.

[2] An organic expander for lead storage batteries containing lignosulfonate, in which a content of reducing sugars per solid content is 5% by mass or less of the total, and a content of a substance with a molecular weight of 5,000 or less per solid content is 30% by mass or less of the total.

Advantageous Effects of Invention

According to the present invention, it is possible to improve charge acceptance while maintaining discharge characteristics of a lead storage battery.

Description of Embodiments

Hereinafter, the present invention will be described in detail in accordance with preferred embodiments thereof. However, the present invention should not be limited at all to the following embodiments.

<Organic expander>

It is preferred that the organic expander of the present invention contains lignin with a methoxy group content of 3 to 20% by mass per solid content. When the methoxy group content is less than 3%, the effect as the organic expander is not recognized since the amount of lignin to be contained is small. In general, lignin has a methoxy group attached to an aromatic nucleus, and therefore, the methoxy group content is an index of the lignin content.

In the present invention, the methoxy group content is a value measured by a method for determining methoxy groups by the method of Viebock and Schwappach (see, "Methods in lignin chemistry", pp. 336 to 340, 1994, published by Uni Publishing Co., Ltd.).

The lignin used in the organic expander for lead storage batteries according to the present invention to be obtained varies depending on the method for treating woody biomass, and there are several types of lignins.

Examples of the lignin to be used in the present invention include the following lignins. For example, there are lignosulfonates, kraft lignin, soda lignin, soda-anthraquinone lignin, organosolv lignin, steam-exploded lignin, sulfuric acid lignin (Klason lignin), and the like. Among them, it is preferable to use lignosulfonate. Particularly preferably, it is particularly preferable to use oxylignin that has been partially desulfonated by reacting lignosulfonate at high temperature and high pressure under an alkaline condition, as described in U.S. Pat. No. 6346347.

The lignin to be used in the present invention may be in a powdered state or a liquid state, but the lignin in a powdered state is preferable. As the lignin in a liquid state, for example, lignin in a powdered state may be dissolved in an appropriate solvent (for example, water, aqueous sodium hydroxide solution, or the like) to obtain lignin in a liquid state.

As the lignin to be used in the present invention, the lignins described above may be used singly or in mixture of two or more kinds thereof in combination.

Hereinafter, the lignosulfonate to be used in the present invention will be described in detail, but is not limited to these lignins.

(Lignosulfonate)

Lignosulfonate refers to a compound in which at least part of lignin or a degradation product thereof is substituted with a sulfonic acid (salt) group. In the lignosulfonate of the present invention, the S content of a sulfonic acid (salt) group is usually 1.0 to 10.0% by mass.

The S content of a sulfonic acid (salt) group of lignosulfonate refers to the S content contained in the sulfonic acid (salt) group with respect to the solid amount of lignosulfonate. Specifically, the S content is a value calculated by the following mathematical formula (1):

Formula (1):

S content (% by mass) of sulfonic acid (salt) group =

Total S content (% by mass) - Inorganic S content (% by mass)

(in mathematical formula (1), the S content indicates the S

content with respect to the solid amount of lignosulfonate in

any case.)

In mathematical formula (1), the total S content can be quantified by ICP emission spectrometry. Further, the inorganic S content can be calculated as the total amount of $SO_3$ content and $SO_4$ content quantified by ion chromatography.

The organic expander for lead storage batteries containing lignosulfonate of the present invention contains reducing sugars. The reducing sugars generally remain in a sulfite cooking process of woody biomass. The content of the reducing sugars is preferably 5% by mass or less, and more preferably 3% by mass or less. By setting the content of the reducing sugars to 5% by mass or less, charge acceptance can be improved while maintaining discharge characteristics of a lead storage battery.

The reducing sugar refers to a sugar that exhibits reducibility, and refers to a sugar that generates an aldehyde group or a ketone group in a basic solution.

Examples of the reducing sugar include all monosaccharides, disaccharides such as maltose, lactose, arabinose, and invert sugar of sucrose, and polysaccharides. The reducing sugar contained in an alkali treated waste liquid usually includes cellulose, hemicellulose, and degradation products thereof. Examples of the degradation products of cellulose and hemicellulose include monosaccharides such as rhamnose, galactose, arabinose, xylose, glucose, mannose, and fructose; and oligosaccharides such as xylooligosaccharides and cellooligosaccharides.

In measurement of the reducing sugar, the content of the reducing sugar can be determined by measuring the reducing sugar by the Somogyi-Schaffer method, and converting the measured value into the amount of glucose.

The lignosulfonate may be in a non-ionized state, and a hydrogen atom of a sulfonic acid group may be replaced by a counter ion.

Examples of the counter ion include a sodium ion, a calcium ion, a magnesium ion, and an ammonium ion.

The counter ion may be a single type of counter ion, or may be a combination of two or more kinds of counter ions.

Usually, an inorganic salt is contained in the lignosulfonate of the present invention. Examples of the inorganic salt include sodium sulfate, sodium sulfite, sodium chloride, magnesium sulfate, magnesium sulfite, magnesium chloride, calcium sulfate, calcium sulfite, calcium chloride, ammonium sulfate, ammonium sulfite, ammonium chloride, and sodium hydroxide. The content of the inorganic salt in lignosulfonate is usually 1 to 25% by mass.

(Method for preparing lignosulfonate)

The lignosulfonate with a low sulfonation degree can be prepared, for example, as follows. The lignosulfonate can be prepared by subjecting a lignocellulose raw material to sulfite treatment. In particular, it is preferable to prepare the lignosulfonate by subjecting a lignocellulose raw material to sulfite cooking treatment.

The lignocellulose raw material is not particularly limited as long as it contains lignocellulose in the formation. Examples thereof include raw materials for pulp, such as wood, and non-wood.

Examples of the wood include coniferous tree woods such as spruce, red pine, Japanese cedar, and Japanese cypress, and broad-leaved tree woods such as white birch and beech. There are no restrictions on the age and collection site of the wood. Therefore, woods collected from trees with ages different from each other, or woods collected from parts of trees different from each other may be used in combination.

Examples of the non-wood include bamboo, kenaf, reed, and rice plant.

As the lignocellulose raw material, these materials may be used singly or in combination of two or more kinds thereof.

The sulfite treatment can be performed by bringing at least either sulfurous acid or a sulfite into contact with the lignocellulose raw material, and is a treatment for obtaining an intermediate product. The conditions of the sulfite treatment is not particularly limited, and may be any condition as long as a sulfonic acid (salt) group can be introduced into an α-carbon atom on the side chain of lignin contained in the lignocellulose raw material.

It is preferred that the sulfite treatment is performed by a sulfite cooking method. In this way, lignin in the lignocellulose raw material can be sulfonated more quantitatively. The sulfite cooking method is also called a sulfurous acid cooking method.

The sulfite cooking method is a method in which a lignocellulose raw material is reacted at a high temperature in a solution (for example, aqueous solution: cooking liquor) of at least either sulfurous acid or a sulfite. The method has been industrially established and implemented, as a method for producing sulfite pulp. Therefore, by performing the sulfite treatment by the sulfite cooking method, economic efficiency and ease of implementation can be improved.

When sulfite cooking is performed, examples of a salt of sulfite include a magnesium salt, a calcium salt, a sodium salt, and an ammonium salt.

The concentration of sulfurous acid ($SO_2$) in a solution of at least either sulfurous acid or a sulfite is not particularly limited, but the ratio of mass (g) of $SO_2$ to 100 mL of reaction chemical solution is preferably 1 g/100 mL or more, and more preferably 2 g/100 mL or more when sulfite cooking is performed. The upper limit is preferably 20 g/100 mL or less, and more preferably 15 g/100 mL or less when sulfite cooking is performed. The $SO_2$ concentration is preferably 1 g/100 mL to 20 g/100 mL, and more preferably 2 g/100 mL to 15 g/100 mL when sulfite cooking is performed.

The pH value in the sulfite treatment is not particularly limited, but is preferably 10 or less, and more preferably 5 or less when sulfite cooking is performed. The lower limit of the pH value is preferably 0.1 or more, and more preferably 0.5 or more when sulfite cooking is performed. The pH value in the sulfite treatment is preferably 0.1 to 10, and more preferably 0.5 to 5 when sulfite cooking is performed.

The temperature in the sulfite treatment is not particularly limited, but is preferably 170°C or less, and more preferably 150°C or less when sulfite cooking is performed. The lower limit is preferably 70°C or more, and more preferably 100°C or more when sulfite cooking is performed. The temperature condition in the sulfite treatment is preferably 70 to 170°C, and more preferably 100°C to 150°C when sulfite cooking is performed.

The treatment time of the sulfite treatment is not particularly limited, and is preferably 0.5 to 24 hours and more preferably 1.0 to 12 hours although it depends on various conditions of the sulfite treatment.

In the sulfite treatment, it is preferable to add a compound that supplies a counter cation (salt). By adding a compound that supplies a counter cation, the pH value in the sulfite treatment can be kept constant. Examples of the compound that supplies a counter cation include MgO, $Mg(OH)_2$, CaO, $Ca(OH)_2$, $CaCO_3$, $NH_3$, $NH_4OH$, NaOH, $NaHCO_3$, and $Na_2CO_3$. The counter cation is preferably a magnesium ion.

In the sulfite treatment, when a solution of at least either sulfurous acid or a sulfite is used, the solution may contain a cooking penetrant (for example, a cyclic ketone compound such as anthraquinone sulfonate, anthraquinone, or tetrahydroanthraquinone) in addition to $SO_2$ and a counter cation (salt) as needed.

There is no limitation to equipment to be used for the sulfite treatment, and for example, generally-known production equipment or the like for dissolving pulp can be used.

In order to separate an intermediate product from a solution of at least either sulfurous acid or a sulfite, the separation may be performed according to a conventional method. Example of the separation method includes a separation method of waste sulfite cooking liquor after sulfite cooking.

According to the sulfite cooking treatment, lignosulfonate with a high sulfonation degree is obtained in some cases, and in those cases, lignosulfonate with a low sulfonation degree can be obtained by partial desulfonation treatment. Examples of the partial desulfonation method include methods described in U.S. Pat. No. 2371136 and JP S58-45287 A, but are not limited to these methods.

Further, lignosulfonate with a low sulfonation degree can be obtained also by the method described in JP 2016-135834 A,

The method for producing an organic expander containing lignosulfonate of the present invention includes a step of subjecting a sulfite cooking black liquor to ultrafiltration treatment using an ultrafiltration membrane (UF membrane) to recover a concentrated liquor.

By subjecting the black liquor to ultrafiltration treatment using the UF membrane, liquid lignin can be recovered as a component contained in the concentrated liquor. In addition, the lignin with high molecular weight and the others can be separated by the ultrafiltration treatment. That is, liquid lignin can be produced from a black liquor using a UF membrane.

(UF Membrane)

As the UF membrane, a known UF membrane can be used. Examples thereof include a hollow fiber membrane, a spiral membrane, a tubular membrane, and a flat membrane.

As a material of the UF membrane, a known material can be used. Examples thereof include cellulose acetate, aromatic polyamide, polyvinyl alcohol, polysulfone, polyvinylidene fluoride, polyethylene, polyacrylonitrile, and ceramic. The UF membrane may be a commercially available product.

The UF membrane has a molecular weight cut off of preferably 5,000 to 30,000, more preferably 10,000 to 25,000, and further preferably 15,000 to 23,000. When a UF membrane with a molecular weight cut off of 5,000 or more is used, it is possible to prevent separation rate of the black liquor from being excessively slow. Further, when a UF membrane with a molecular weight cut off of 30,000 or less is used, it is possible to prevent lignin from being not separated from the black liquor.

The ultrafiltration treatment using a UF membrane is divided into two steps of concentration and making the volume constant. Only one or both of the two steps may be performed, or both may be performed. When both are performed, it is preferable to make the volume constant after concentration.

The concentration ratio by the ultrafiltration treatment using a UF membrane can be arbitrarily set. That is, the ultrafiltration treatment may be stopped when the outflow amount of permeate becomes an arbitrary amount. It is preferable to concentrate 2 to 6 times. For example, 4 times concentration means that the amount of permeate that has permeated the UF membrane is 3/4 of the amount of the liquid before treatment.

The constant volume ratio by the ultrafiltration treatment using a UF membrane can be arbitrarily set. That is, water may be added while keeping the volume of the concentrated liquor constant, and the ultrafiltration treatment may be stopped when the amount of permeate becomes an arbitrary amount. It is preferable to make the volume constant by adding water in an amount 0.5 to 3 times the concentrated liquor. For example, double constant volume means a time when water is added to a stock solution while keeping the amount of the stock solution (black liquor) constant, ultrafiltration treatment is performed, and the amount of permeate becomes twice the amount of the stock solution before treatment.

(Ultrafiltration treatment)

The temperature of the black liquor during the ultrafiltration treatment is not particularly limited. For example, the temperature is preferably 20 to 80°C, and more preferably 20 to 70°C in consideration of a heat resistance of the UF membrane material.

The pH value of the black liquor during the ultrafiltration treatment is preferably 2 to 11.

The solid content concentration (w/w) of the black liquor during the ultrafiltration treatment is preferably 2 to 30%, and more preferably 5 to 15%.

(Concentrated liquor)

In the concentrated liquor, the content of the substance with a molecular weight of 5,000 or less is preferably 30% by mass or less, and the content of the substance with a molecular weight of 5,000 or less is more preferably 20% by mass or less. When the content of the substance with a molecular weight of 5,000 or less exceeds 30% by mass, low-molecular impurities in the concentrated liquor increase, and the charge acceptance of the lead storage battery is not improved.

The molecular weight of lignin in the concentrated liquor after the ultrafiltration treatment can be measured by gel permeation chromatography (GPC). Measurement of GPC may be performed by a known method for pullulan conversion under the following conditions.

Measuring device; Manufactured by Tosoh Corporation
Column to use; Shodex Column OH-pak SB-806 HQ, SB-804 HQ, SB-802.5 HQ
Eluent; Aqueous solution of 1.0% of Na tetraborate and 0.3% of isopropyl alcohol
Eluent flow rate; 1.00 ml/min
Column temperature; 50°C
Measurement sample concentration; 0.2% by mass
Standard substance; Pullulan (manufactured by Showa Denko K.K.)
Detector; RI detector (manufactured by Tosoh Corporation)
Calibration curve; Pullulan reference

The weight average molecular weight of the lignin in the concentrated liquor after the ultrafiltration treatment is preferably 10,000 to 40,000, and more preferably 20,000 to 35,000.

The content of lignin with a molecular weight of 5,000 or less in the concentrated liquor can be calculated as follows. First, the concentrated liquor is measured by GPC under the above conditions, and a GPC chromatogram in which the peak intensity (mV) is plotted on the vertical axis and elution time (Retention Time) is plotted on the horizontal axis is obtained. A baseline is usually from elution start time to elution end time of polymer peak. When the elution end time is not clearly recognized, a base line is created, and then divided at the valley formed between the peaks, and this point is defined as the elution end time of polymer peak. Since the GPC chromatogram of lignin usually does not give a clear peak, a polymer elution curve including a plurality of peaks from the start of elution of the polymer peak is defined as one peak. The peak is vertically divided at a position of a molecular weight of 5,000, and the content of lignin with a molecular weight of 5,000 or less can be calculated by calculating the area ratio.

The organic expander of the present invention is mainly added to a negative electrode plate of a lead storage battery. The addition ratio is usually 0.02 to 1.0% by mass based on the lead powder.

The lead storage battery using the organic expander for lead storage batteries of the present invention can be used for a battery for an automobile, a battery for a portable device, a battery for backup of computer, a battery for communication, or the like.

Examples

Hereinafter, the present invention will be described in detail with reference to Examples. The following examples are intended to suitably illustrate the present invention, and do not limit the present invention.

<Ultrafiltration treatment of black liquor>

Sun X M100 (manufactured by NIPPON PAPER INDUSTRIES CO., LTD., concentration: 12%, main ingredient: lignosulfonate) was subjected to ultrafiltration treatment (molecular weight cut off: 20,000) to be 4 times concentrated and make it 1.0 time constant volume, and the obtained concentrated liquor was pulverized in a vacuum dryer (105°C, 24 h) to obtain lignosulfonate powder (Lignin 1). Further, Sun X M100 was subjected to ultrafiltration treatment (molecular weight cut off: 12,000) to be 4 times concentrated and make it 1.0 time constant volume, and the obtained concentrated liquor was pulverized in a vacuum dryer (105°C, 24 h) to obtain lignosulfonate powder (Lignin 2). Furthermore, Sun X M100 was pulverized without performing ultrafiltration treatment to obtain lignosulfonate powder (Lignin 3).

Physical property values of Lignins 1 to 3 are shown in Table 1 below. Note that % in Table 1 represents % with respect to the solid content.

[Table 1]

| Sample name | Reducing sugars (%) | Weight average molecular weight Mw (RI) | Content of molecular weight of 5,000 or less (%) |
|---|---|---|---|
| Lignin 1 | 2.6 | 31000 | 9.0 |
| Lignin 2 | 2.8 | 21000 | 22.0 |
| Lignin 3 | 15.6 | 9000 | 65.0 |

<Preparation of lead storage battery>

The lead storage battery positive electrode active material pastes of the present examples and comparative example were produced as follows in accordance with JP H09-237632 A. First, a lead powder containing 70 to 80% by weight of lead monoxide, 13% by mass of dilute sulfuric acid (specific gravity 1.26: 20°C) based on the lead powder, and 12% by mass of water based on the lead powder were kneaded to prepare a positive electrode active material paste. About 25 g of the paste-like positive electrode active material was filled in a current collector made of a lead alloy grid, and then left (cured) in an undried state at 80°C for 24 hours in a nitrogen atmosphere to obtain an unformed positive electrode plate.

Next, a lead powder containing 70 to 80% by weight of lead monoxide, 13% by mass of dilute sulfuric acid (specific gravity 1.26: 20°C) based on the lead powder, 12% by mass of water based on the lead powder, 1.2% by mass of barium sulfate, and 0.3% by mass of an organic expander were added and kneaded to prepare a negative electrode active material paste. About 25 g of the negative electrode active material paste was filled in a current collector made of a lead alloy grid, and then left (cured) in an undried state at 80°C for 24 hours in a nitrogen atmosphere to obtain an unformed negative electrode plate.

The negative electrode plate and the positive electrode plate obtained by the above production method were combined to prepare a lead storage battery with a rated capacity of 28 Ah - 2 V.

(High-rate discharge characteristic test)

A high-rate discharge characteristic test at 150 A was performed in accordance with JIS D5301. Discharge duration time was evaluated. The longer the discharge duration time is, the better the evaluation is.

(Charge acceptance test)

A charge acceptance test was performed in accordance with JIS D5301. Charging current in 10 minutes after the start of charging was evaluated. The higher the current value is, the better the evaluation is.

(5-Hour rate capacity test)

A 5-hour rate capacity test was performed in accordance with JIS D5301. Discharge duration time was evaluated. The longer the discharge duration time is, the better the evaluation is.

The test result is shown in Table 2.

[Table 2]

|  | Organic expander (lignin) | High-rate discharge characteristic test | Charge acceptance test | 5-Hour rate capacity test |
|---|---|---|---|---|
| Example 1 | Lignin 1 | 3.5 min | 12.6 A | 5.4 h |
| Example 2 | Lignin 2 | 3.4 min | 11.8 A | 5.3 h |
| Comparative Example | Lignin 3 | 3.4 min | 9.4 A | 4.8 h |

As shown in Table 2, the organic expanders for lead storage batteries of the present invention in Examples 1 and 2 had almost the same high-rate discharge characteristics and excellent charge acceptance as compared with the organic expander for lead storage batteries of Comparative Example. In addition, the organic expanders for lead storage batteries of the present invention in Examples 1 and 2 were also excellent in 5-hour rate capacity as compared with the organic expander for lead storage batteries of Comparative Example.

**Claims**

1. A method for producing an organic expander for lead storage batteries containing lignosulfonate, the method comprising a step of subjecting a sulfite cooking black liquor to ultrafiltration treatment using an ultrafiltration membrane to recover a concentrated liquor of the sulfite cooking black liquor obtained.

2. An organic expander for lead storage batteries containing lignosulfonate, wherein a content of reducing sugars per solid content is 5% by mass or less of the total, and a content of a substance with a molecular weight of 5,000 or less per solid content is 30% by mass or less of the total.

**INTERNATIONAL SEARCH REPORT**

| International application No. |
| --- |
| PCT/JP2021/008854 |

**A. CLASSIFICATION OF SUBJECT MATTER**
Int.Cl. H01M4/62(2006.01)i
FI: H01M4/62B

According to International Patent Classification (IPC) or to both national classification and IPC

**B. FIELDS SEARCHED**

Minimum documentation searched (classification system followed by classification symbols)
Int.Cl. H01M4/62

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 7-18595 A (NIPPON PAPER INDUSTRIES CO., LTD.) 20 January 1995 (1995-01-20) | 1-2 |
| A | JP 9-147872 A (JAPAN STORAGE BATTERY CO., LTD.) 06 June 1997 (1997-06-06) | 1-2 |
| A | JP 2006-169134 A (FURUKAWA BATTERY CO., LTD.) 29 June 2006 (2006-06-29) | 1-2 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 April 2021 | 11 May 2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

| INTERNATIONAL SEARCH REPORT | International application No. |
| Information on patent family members | PCT/JP2021/008854 |

```
JP 7-18595 A        20 January 1995    (Family: none)

JP 9-147872 A       06 June 1997       (Family: none)

JP 2006-169134 A    29 June 2006       (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2371136 A
- US 3523041 A
- JP S62145655 A
- JP 2002117856 A
- WO 2002039519 A
- JP 2005294027 A
- JP 2007165273 A
- JP H11204111 A
- JP H09007630 A
- US 6346347 B
- US 6664002 B
- JP S5845287 A
- JP 2016135834 A

**Non-patent literature cited in the description**

- Methods in lignin chemistry. Uni Publishing Co., Ltd, 1994, 336-340